# EUROPEAN PATENT APPLICATION

(11) **EP 4 746 464 A1**
(43) Date of publication of application: **20.05.2026**
(21) Application number: 24848140.0
(22) Date of filing: 25.07.2024
(51) Int. Cl.: H04W 8/02, G06F 8/65

(54) **COMMUNICATION METHOD AND COMMUNICATION APPARATUS**

(30) Priority: 03.08.2023 CN 202310973804
(71) Applicant: Huawei Technologies Co., Ltd., Shenzhen, Guangdong 518129 (CN)
(72) Inventor: LI, Lun, Shenzhen, Guangdong 518129 (CN); GUO, Yanfei, Shenzhen, Guangdong 518129 (CN); WU, Yizhuang, Shenzhen, Guangdong 518129 (CN); HU, Li, Shenzhen, Guangdong 518129 (CN)
(74) Representative: Goddar, Heinz J.
(86) International application number: PCT/CN2024/107577
(87) International publication number: WO 2025/026183

(57) **Abstract**

This application provides a communication method and a communication apparatus. The method includes: A certificate management network element obtains first certificate information corresponding to a first service certificate of a first network element and second certificate information corresponding to a second service certificate of a second network element; and when network element types of the first network element and the second network element are the same and the first service certificate and the second service certificate need to be updated, the certificate management network element determines an update policy corresponding to the first service certificate and the second service certificate, and controls update of the first service certificate and the second service certificate according to the update policy. In a process of determining an update policy corresponding to service certificates, the certificate management network element identifies network element types of different network elements, and formulates an appropriate update policy for network elements of a same network element type, to avoid a system fault caused because the network element type is not considered in a service certificate update procedure, thereby improving performance of a system.

## Description

This application claims priority to Chinese Patent Application No. 202310973804.9, filed with the China National Intellectual Property Administration on August 3, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A certificate enrollment and management framework (Certificate Enrollment and Management Framework, CEMAF) is defined in a certificate management-related subject in the 3rd generation partnership project (3rd Generation Partnership Project, 3GPP). The CEMAF includes a certificate management network element (Certificate management Function, CeMF), a certificate enrollment network element (Certificate enrollment Function, CeEF), and a function network element (network function, NF) that needs to request a service certificate. The certificate management network element may implement service certificate update management. Currently, in an existing service certificate update procedure, a large quantity of certificates may be simultaneously updated. However, in a certificate update process, a corresponding network element cannot be used. Particularly, if network elements that provide a same service in a network simultaneously update certificates, the network cannot provide the corresponding service.

Therefore, in a case of ensuring network security, how to optimize the service certificate update procedure to avoid impact of certificate update on the corresponding service in the network becomes an urgent technical problem to be resolved.

### SUMMARY

This application provides a communication method, to identify a network element type of a network element in a service certificate update procedure, and consider impact of the network element type on service certificate update, to avoid impact of certificate update on a corresponding service in a network, thereby improving performance of a system.

According to a first aspect, a communication method is provided. The method may be performed by a certificate management network element, or may be performed by a component (for example, a chip or a circuit) of the certificate management network element. This is not limited.

The communication method includes: obtaining first certificate information corresponding to a first service certificate of a first network element and second certificate information corresponding to a second service certificate of a second network element, where the first certificate information includes a validity period of the first service certificate and information about a network element type of the first network element, and the second certificate information includes a validity period of the second service certificate and information about a network element type of the second network element; when determining, based on the information about the network element type of the first network element and the information about the network element type of the second network element, that the network element types of the first network element and the second network element are the same, and determining, based on the validity period of the first service certificate and the validity period of the second service certificate, that the first service certificate and the second service certificate need to be updated, determining an update policy corresponding to the first service certificate and the second service certificate; and controlling update of the first service certificate and the second service certificate according to the update policy.

According to the foregoing solution, the first certificate information that corresponds to the first service certificate of the first network element and that is obtained by the certificate management network element includes the validity period of the first service certificate and the information about the network element type of the first network element, and the obtained second certificate information corresponding to the second service certificate of the second network element includes the validity period of the second service certificate and the information about the network element type of the second network element. The information about the network element type of the first network element indicates the network element type of the first network element, the information about the network element type of the second network element indicates the network element type of the second network element, the validity period of the first service certificate indicates an occasion at which the first service certificate needs to be updated, and the validity period of the second service certificate indicates an occasion at which the second service certificate needs to be updated.

When the network element types of the first network element and the second network element are the same and the first service certificate and the second service certificate need to be updated, the certificate management network element determines the update policy corresponding to the first service certificate and the second service certificate. In addition, the certificate management network element may control the update of the first service certificate and the second service certificate according to the determined update policy. In the technical solution, in a process of determining an update policy corresponding to service certificates, considering network element types of network elements, the certificate management network element formulates an appropriate update policy for network elements of a same network element type, to avoid a system fault caused because the network element type is not considered in a service certificate update procedure, and avoid impact of certificate update on a corresponding service in a network, thereby improving performance of a system.

With reference to the first aspect, in some implementations of the first aspect, the first certificate information includes the first service certificate, a network element type nfTypes field of the first service certificate includes the information about the network element type of the first network element, the second certificate information includes the second service certificate, and a network element type nfTypes field of the second service certificate includes the information about the network element type of the second network element; and the method further includes: obtaining the information about the network element type of the first network element from the nfTypes field of the first service certificate, and obtaining the information about the network element type of the second network element from the nfTypes field of the second service certificate. Optionally, an nfTypes field may be a field in an extension field of a service certificate, or may be a field in another field. This is not limited in this application.

According to the foregoing solution, the information about the network element type of the first network element included in the first certificate information may be carried in the network element type nfTypes field of the first service certificate, and the information about the network element type of the second network element included in the second certificate information may be carried in the network element type nfTypes field of the second service certificate. The certificate management network element may obtain information about a network element type from the nfTypes field of the service certificate, that is, the information about the network element type may be implicitly carried in the first certificate information.

With reference to the first aspect, in some implementations of the first aspect, the obtaining the first certificate information and the second certificate information includes: receiving the first certificate information and the second certificate information from a certification authority; receiving the first certificate information from the first network element, and receiving the second certificate information from the second network element; or receiving the first certificate information and the second certificate information from an operations, administration, and maintenance (operations, administration, and maintenance, OAM) device.

According to the foregoing solution, the certificate management network element may obtain the first certificate information and the second certificate information in different manners. For example, in a service certificate enrollment procedure, the certificate management network element receives the first certificate information and the second certificate information from the certification authority. For another example, the certificate management network element receives, from different network elements, certificate information corresponding to service certificates of the network elements. For still another example, the certificate management network element receives, from the OAM device, certificate information corresponding to service certificates of different network elements. In this way, flexibility of the solution is improved.

With reference to the first aspect, in some implementations of the first aspect, the method further includes: determining, based on the information about the network element type of the first network element and the information about the network element type of the second network element, that the network element types of the first network element and the second network element are the same; and determining, based on the validity period of the first service certificate and the validity period of the second service certificate, that the first service certificate and the second service certificate need to be updated.

According to the foregoing solution, the certificate management network element may determine, based on the obtained information about the network element type of the first network element and the obtained information about the network element type of the second network element, that the network element types of the first network element and the second network element are the same. For example, both the first network element and the second network element are AMFs. In addition, the certificate management network element may determine, based on the obtained validity period of the first service certificate and the obtained validity period of the second service certificate, that the first service certificate and the second service certificate need to be updated.

With reference to the first aspect, in some implementations of the first aspect, the determining, based on the validity period of the first service certificate and the validity period of the second service certificate, that the first service certificate and the second service certificate need to be updated includes: determining, based on the validity period of the first service certificate and the validity period of the second service certificate, that a time interval between expiration time of the first service certificate and expiration time of the second service certificate is less than a first preset threshold.

According to the foregoing solution, that the certificate management network element determines that the first service certificate and the second service certificate need to be updated may be: determining, based on the validity period of the first service certificate and the validity period of the second service certificate, that the time interval between the expiration time of the first service certificate and the expiration time of the second service certificate is less than the first preset threshold. In other words, the certificate management network element determines that the occasion at which the first service certificate needs to be updated is close to the occasion at which the second service certificate needs to be updated. If it is determined, based on the expiration time of the first service certificate and the expiration time of the second service certificate, that the first service certificate and the second service certificate need to be updated, the first network element and the second network element may simultaneously perform service certificate update, and there is no available network element in the network element type of the first network element in the system. To avoid this case, in the technical solution, the certificate management network element formulates the update policy.

With reference to the first aspect, in some implementations of the first aspect, the determining the update policy corresponding to the first service certificate and the second service certificate includes: determining a first update policy corresponding to the first service certificate, and determining a second update policy corresponding to the second service certificate, where the first update policy indicates update time of the first service certificate, the second update policy indicates update time of the second service certificate, and the update time of the first service certificate is different from the update time of the second service certificate; and the controlling the update of the first service certificate and the second service certificate according to the update policy includes: sending the first update policy to the first network element, and sending the second update policy to the second network element.

According to the foregoing solution, the update policy formulated by the certificate management network element may be: formulating the first update policy for the first service certificate, and formulating the second update policy for the second service certificate. Specifically, the first update policy indicates the update time of the first service certificate, the second update policy indicates the update time of the second service certificate, and the update time of the first service certificate is different from the update time of the second service certificate. The certificate management network element sends the first update policy and the second update policy to the first network element and the second network element respectively, so that the first network element and the second network element initiate service certificate update at different occasions, to avoid that the first network element and the second network element simultaneously perform service certificate update.

With reference to the first aspect, in some implementations of the first aspect, the determining the update policy corresponding to the first service certificate and the second service certificate includes: determining an overall update policy corresponding to the first service certificate and the second service certificate, where the overall update policy indicates update time of the first service certificate and update time of the second service certificate, and the update time of the first service certificate is different from the update time of the second service certificate; and the controlling the update of the first service certificate and the second service certificate according to the update policy includes: if receiving, from the first network element before the update time of the first service certificate, a first request message for requesting to update the first service certificate, rejecting responding to the first request message; and if receiving, from the second network element before the update time of the second service certificate, a second request message for requesting to update the second service certificate, rejecting responding to the second request message.

According to the foregoing solution, the update policy formulated by the certificate management network element may be: formulating the overall update policy for the first service certificate and the second service certificate, where the overall update policy indicates the update time of the first service certificate and the update time of the second service certificate, and the update time of the first service certificate is different from the update time of the second service certificate. After formulating the overall update policy, the certificate management network element controls the update of the first service certificate and the update of the second service certificate according to the overall update policy, to avoid that the first network element and the second network element simultaneously perform service certificate update.

With reference to the first aspect, in some implementations of the first aspect, the determining the update policy corresponding to the first service certificate and the second service certificate includes: determining an overall update policy corresponding to the first service certificate and the second service certificate, where the overall update policy indicates to control the update of the first service certificate and the second service certificate based on a quantity of online network elements in a plurality of network elements corresponding to the network element type, the plurality of network elements corresponding to the network element type further include N online third network elements in addition to the first network element and the second network element, and N is a positive integer; and the controlling the update of the first service certificate and the second service certificate according to the update policy includes: if N is greater than a second preset threshold, determining that the first service certificate and the second service certificate can be simultaneously updated; and if N is less than or equal to the second preset threshold, determining that the first service certificate and the second service certificate cannot be simultaneously updated.

According to the foregoing solution, the update policy formulated by the certificate management network element may be: formulating the overall update policy for the first service certificate and the second service certificate, where the overall update policy indicates to control the update of the first service certificate and the second service certificate based on the quantity of online network elements in the plurality of network elements corresponding to the network element type. After formulating the overall update policy, the certificate management network element controls the update of the first service certificate and the update of the second service certificate according to the overall update policy, to avoid that the first network element and the second network element simultaneously perform service certificate update.

With reference to the first aspect, in some implementations of the first aspect, the method further includes: receiving, from the first network element, a first request message for requesting to update the first service certificate, and receiving, from the second network element, a second request message for requesting to update the second service certificate; when determining that the first service certificate and the second service certificate can be simultaneously updated, responding to the first request message and the second request message; and when determining that the first service certificate and the second service certificate cannot be simultaneously updated, rejecting responding to the first request message and/or the second request message.

With reference to the first aspect, in some implementations of the first aspect, the obtaining the network element information corresponding to the network element type includes: sending a third request message to a repository function network element, where the third request message is for requesting to provide information about the plurality of network elements corresponding to the network element type, and the third request message includes the information about the network element type; and receiving a response message from the repository function network element, where the response message includes information about a part or all of the plurality of network elements corresponding to the network element type, and the information about the plurality of network elements corresponding to the network element type indicates the quantity of online network elements in the plurality of network elements corresponding to the network element type. It should be understood that the repository function network element may provide, for the certificate management network element by using at least one response message, the information about the plurality of network elements corresponding to the network element type (for example, a plurality of response messages may be used, where a specific response message carries information about a part of the plurality of network elements). In this way, the certificate management network element determines, based on the information about the plurality of network elements corresponding to the network element type, the quantity of online network elements in the plurality of network elements corresponding to the network element type.

With reference to the first aspect, in some implementations of the first aspect, the information about the plurality of network elements corresponding to the network element type includes: one or more of identifiers, fully qualified domain names FQDNs, or internet protocol (Internet Protocol, IP) address information of the plurality of network elements corresponding to the network element type.

According to a second aspect, a communication method is provided. The method may be performed by a function network element (for example, the foregoing first network element or second network element) that needs to request a service certificate, or may be performed by a component (for example, a chip or a circuit) of the function network element that needs to request the service certificate. This is not limited.

The communication method includes: receiving a first update policy from a certificate management network element, where the first update policy indicates update time of a first service certificate; and sending an update request message for the first service certificate to a certificate enrollment network element at the update time of the first service certificate.

With reference to the second aspect, in some implementations of the second aspect, the sending the update request message for the first service certificate to the certificate enrollment network element includes: directly sending the update request message for the first service certificate to the certificate enrollment network element; or sending the update request message for the first service certificate to the certificate enrollment network element via a certificate management network element.

For technical effects of the method shown in the second aspect and the possible designs of the second aspect, refer to the technical effects in the first aspect and the possible designs of the first aspect.

According to a third aspect, a communication method is provided. The method may be performed by a repository function network element, or may be performed by a component (for example, a chip or a circuit) of the repository function network element. This is not limited.

The communication method includes: receiving a third request message from a certificate management network element, where the third request message is for requesting to provide information about a plurality of network elements corresponding to a network element type, and the third request message includes the information about the network element type; determining, according to a local policy, that the certificate management network element can obtain the information about the plurality of network elements corresponding to the network element type; and sending a response message to the certificate management network element, where the response message includes information about a part or all of the plurality of network elements corresponding to the network element type.

With reference to the third aspect, in some implementations of the third aspect, the determining, according to the local policy, that the certificate management network element can obtain the information about plurality of network elements corresponding to the network element type includes: determining, based on an identifier of the certificate management network element, that the identifier of the certificate management network element belongs to the certificate management network element that can obtain the information about the plurality of network elements corresponding to the network element type.

According to the foregoing solution, the repository function network element may determine, based on the identifier of the certificate management network element, whether the certificate management network element is the network element that can obtain the information about the plurality of network elements corresponding to the network element type, to avoid that an unauthorized certificate management network element obtains information about a network element, and avoid information leakage.

With reference to the third aspect, in some implementations of the third aspect, the third request message includes a subscription request message or a discovery request message.

With reference to the third aspect, in some implementations of the third aspect, the information about the plurality of network elements corresponding to the network element type includes: one or more of identifiers, fully qualified domain names FQDNs, or internet protocol address information of the plurality of network elements corresponding to the network element type.

For technical effects of the method shown in the third aspect and the possible designs of the third aspect, refer to the technical effects in the first aspect and the possible designs of the first aspect.

According to a fourth aspect, a communication apparatus is provided. The apparatus is configured to perform the methods according to the first aspect to the third aspect. Specifically, the apparatus may include a unit and/or a module configured to perform the method according to any one of the foregoing implementations of the first aspect to the third aspect, for example, a processing unit and/or a communication unit.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, a communication apparatus is provided. The apparatus includes: a memory, configured to store a program; and at least one processor, configured to execute a computer program or instructions stored in the memory, to perform the method according to any one of the foregoing implementations of the first aspect to the third aspect, or any one of the foregoing implementations of the second aspect and the third aspect.

In an implementation, the apparatus is a terminal device.

In another implementation, the apparatus is a chip, a chip system, or a circuit used in a terminal device.

According to a sixth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable medium stores program code executed by a device, and the program code includes instructions for performing the method according to any one of the foregoing implementations of the first aspect to the third aspect.

According to an eighth aspect, a computer program product including instructions is provided. When the computer program product is run on a computer, the computer is caused to perform the method according to any one of the foregoing implementations of the first aspect to the third aspect.

According to a ninth aspect, a chip is provided. The chip includes a processor and a communication interface. The processor reads, through the communication interface, instructions stored in a memory, to perform the method according to any one of the foregoing implementations of the first aspect to the third aspect.

Optionally, in an implementation, the chip further includes the memory. The memory stores a computer program or the instructions. The processor is configured to execute the computer program or the instructions stored in the memory. When the computer program or the instructions are/is executed, the processor is configured to perform the method according to any one of the foregoing implementations of the first aspect to the third aspect.

According to a tenth aspect, a communication system is provided, including the certificate management network element in the first aspect and the function network element that needs to request the service certificate in the second aspect.

According to an eleventh aspect, a communication system is provided, including the certificate management network element in the first aspect and the repository function network element in the third aspect.

### BRIEF DESCRIPTION OF DRAWINGS

FIG. 1 is a diagram of a network architecture 100 according to this application;
FIG. 2 is a diagram of a CEMAF;
FIG. 3 is a schematic flowchart of a communication method according to this application;
FIG. 4 is a schematic flowchart of a service certificate request procedure according to this application;
FIG. 5 is a schematic flowchart of another communication method according to this application;
FIG. 6 is a block diagram of a communication apparatus 10 according to an embodiment of this application;
FIG. 7 is a diagram of another communication apparatus 20 according to an embodiment of this application; and
FIG. 8 is a diagram of a chip system 30 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is briefly referred to as a 3GPP network. The 3GPP network usually includes but is not limited to a 5G network, a 4th generation (4th generation, 4G) mobile communication network, and another future communication system like a 6th generation (6th generation, 6G) network.

For ease of description, the PLMN or the 5G network is used as an example for description in embodiments of this application.

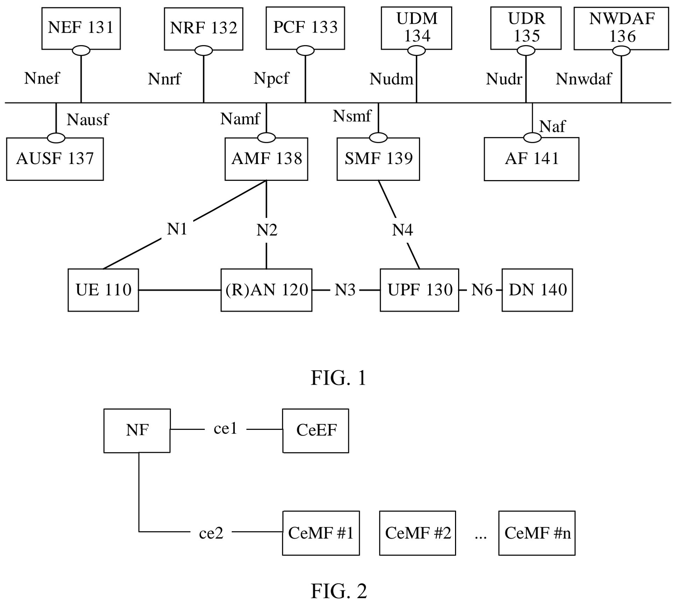

FIG. 1 is a diagram of a network architecture 100 according to this application. A 5G network architecture based on a service-based architecture SBA in a non-roaming scenario defined in a 3GPP standardization process is used as an example. As shown in the figure, the network architecture may include three parts: a terminal device part, a DN, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having a wireless transceiver function, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on the land, including an indoor device, an outdoor device, a handheld device, or a vehicle-mounted device; may be deployed on the water (for example, on a ship); or may be deployed in the air (for example, on an airplane, a balloon, or a satellite). The terminal device 110 may be a cellular phone (cellular phone), a cordless telephone set, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a compute device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). The terminal device herein is a 3GPP terminal. A type or the like of the terminal device is not limited in embodiments of this application. For ease of description, in this application, an example in which the UE represents the terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. The access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a small cell base station device (pico), a mobile switching center, a network device in a future network, or the like. In systems using different radio access technologies, devices having functions of the access network device may have different names. For ease of description, in all embodiments of this application, the foregoing apparatuses that provide the wireless communication function for the terminal device 110 are collectively referred to as access network devices, or briefly referred to as RANs or ANs. It should be understood that a specific type of the access network device is not limited in this specification.

In some deployments, the (R)AN 120 may include a central unit (central unit, CU) and a distributed unit (distributed unit, DU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. It may be understood that the (R)AN 120 may be a device including one or more of a CU node and a DU node. In addition, the CU may be classified into a network device in an access network (radio access network, RAN), or the CU may be classified into a network device in a core network (core network, CN). This is not limited in this application.

The CN part may include but is not limited to the following NFs: a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network. Certainly, in some implementations, the DN may alternatively be deployed by an operator, that is, the DN is a part of a PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server to obtain instructions of the control server, transmit collected sensor data to the control server according to the instructions, and the like. For another example, the data network DN 140 may be an internal office network of a company, a mobile phone or a computer of an employee of the company may be the terminal device 110, and the mobile phone or the computer of the employee may access information, a data resource, and the like on the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed on the data network DN 140 and/or a service provided by a third party.

The following further briefly describes NF functions included in the network architecture 100.
1. The UPF 130 is a gateway provided by the operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by the operator, and mainly enables a third party to use a service provided by a network, support the network in opening a capability, an event, and data analysis of the network, convert security configuration information from an external application to the PLMN and exchange information inside and outside the PLMN, provide an API interface opened by the operator network, provide interaction between an external server and an internal operator network, and the like.
3. The NRF 132 is a control plane function provided by the operator, and may be configured to maintain real-time information of a network function and a service in the network. For example, the NRF supports network service discovery, maintains services supported by NF configuration data (an NF profile) of NF instances, supports service discovery of a communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
   In this application, the NRF may provide, for a certificate management network element by using a network service discovery procedure or a network service subscription procedure, quantities of available network elements corresponding to different network element types in a specific area. The following describes functions of the NRF with reference to specific examples. Details are not described herein.
4. The PCF 133 is a control plane function provided by the operator, and supports a unified policy framework to govern network behavior and provide subscription information related to a policy rule and policy decision for another control function.
5. The UDM 134 is a control plane function provided by the operator, and is responsible for storage of a subscription permanent identifier (subscription permanent identifier, SUPI) of a subscriber of the operator network, a generic public subscription identifier (generic public subscription identifier, GPSI) of the subscriber, a credential (credential), and other information. The SUPI is first encrypted during transmission, and the encrypted SUPI is referred to as a hidden subscription concealed identifier (subscription concealed identifier, SUCI). The information stored in the UDM network function 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom or a user using a subscriber identity module card of China Mobile. The credential of the subscriber may be a long-term key stored in the subscriber identity module card, or a stored small file, for example, information related to encryption of the subscriber identity module card, and is used for authentication and/or authorization. It should be noted that the permanent identifier, the credential, a security context, authentication data (cookie), and a token are equivalent to information related to verification/authentication and authorization, and are not limited or distinguished between each other for ease of description in embodiments of this application.
6. The UDR 135 is a control plane function provided by the operator, and provides a function of storing and obtaining subscription data for the UDM, provides a function of storing and obtaining policy data for the PCF, stores and obtains NF group ID (group ID) information of a user, and the like.
7. The NWDAF 136 is a control plane function provided by the operator, and mainly functions to collect data from an NF, an external application function AF, an OAM device, and the like, and provide NWDAF service registration, data openness, data analysis, and the like for the NF and the AF.
8. The AUSF 137 is a control plane function provided by the operator, and is usually used for primary authentication, that is, authentication between the terminal device 110 (a subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
   The AMF 138 is configured to perform a NAS connection to UE, and has a same 5G NAS security context as the UE. The 5G NAS security context includes KAMF, key identification information same as that of a NAS hierarchy key, a UE security capability, and uplink and downlink NAS COUNT values. The NAS hierarchy key includes a NAS encryption key and a NAS integrity protection key that are respectively used for confidentiality protection and integrity protection of NAS messages.
10. The SMF 139 is a control plane network function provided by the operator network, and is responsible for managing a PDU session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.
11. The AF 141 is a control plane network function provided by the operator network, is configured to provide application layer information, and may interact with a policy framework by using the network exposure function network element, directly interact with a policy framework to make a policy decision request, or the like. The AF may be located inside or outside the operator network.

It may be understood that the foregoing network elements or functions may be physical entities in a hardware device, software instances running on dedicated hardware, or virtualization functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that names of interfaces between the network functions in the figure are merely examples. During specific implementation, the interface names of the system architecture may alternatively be other names. This is not limited in this application. In addition, names of messages (or signaling) transmitted between the foregoing network elements are merely examples, and do not constitute any limitation on functions of the messages.

For ease of description, in embodiments of this application, a network function (like the NEF 131, ..., and the SMF 139) is collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions, for example, may be combined as required to form a network slice. The core network elements may be independent devices, or may be integrated into a same device to implement different functions. Specific forms of the foregoing network elements are not limited in this application.

Network element types involved in the following embodiments may be: Network elements are divided into different network element types in a division manner like division based on service functions, division based on deployment locations, or division based on home domains. For example, the division based on the service functions may mean that the foregoing network element types such as the SMF, the AMF, the UPF, and the NEF are obtained through division. For another example, the division based on the deployment locations may mean that an access network element or a non-access network element is obtained through division. For still another example, the division based on the home domains may mean that a visited network element or a home network element is obtained through division.

For example, network elements of different network element types provide different services. For example, a network element of the AMF is configured to be responsible for access control and mobility management for the terminal device accessing the operator network. For another example, a network element of the SMF is configured to be responsible for managing a PDU session of the terminal device.

It should be understood that in a service certificate update procedure, a large quantity of certificates may be simultaneously updated. However, in a certificate update process, a corresponding network element cannot be used. Particularly, if network elements that provide a same service in a network simultaneously update certificates, the network cannot provide the corresponding service. For example, if all AMFs in the network perform service certificate update, there is no available AMF in the network.

It should be further understood that the foregoing names are defined merely for ease of distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

For ease of understanding embodiments of this application, some basic concepts in this application are briefly described. It should be understood that the basic concepts described below are described by using basic concepts specified in an NR protocol as an example, but embodiments of this application are not limited to being applied only to the NR system. Therefore, standard names appearing when the NR system is used as an example for description are all functional descriptions, and specific names are not limited, indicate only functions of a device, and may be correspondingly extended to another future system.
1. Certification authority (Certification Authority, CA): is responsible for managing an entire lifecycle of a public key, including issuing a certificate, defining a certificate validity period, and revoking the certificate. It should be noted that the CA may further include a registration authority (registration authority, RA), and the RA is configured to submit a certificate enrollment request to the CA after obtaining and authenticating a user identity. The RA may be a function integrated into the CA, or may be independently deployed. In this application, it is assumed that the CA integrates the function of the RA. A certificate enrollment network element (Certificate enrollment Function, CeEF) in the following may be a part of an interaction function module in the CA or the RA.
2. Certificate management protocol (Certificate management protocol, CMP): is an internet protocol used to obtain digital certificates that comply with the X.509 standard in a public key infrastructure (Public Key Infrastructure, PKI) system. Specifically, the CMP is used to provide online interaction between PKI components, including interaction between the CA and a client system, and define protocol messages for creating and managing certificates. The term "certificate" in the CMP is an X.509 v3 certificate defined in X.509. This is described in detail in an existing technical document (for example, IETF RFC 4210), and is not described in detail in this application.
3. X.509 certificate: The X.509 standard specifies information that may be included in the certificate, and describes a method (a data format) for recording the information. A related certificate profile is defined in an existing technical document (for example, RFC 5280). The X.509 certificate includes information listed in the following Table 1.

**Table 1: X.509 certificate format**

| Information name | Information function |
|---|---|
| Version | Identifies a version of the X.509 standard used for the certificate, where this may affect information that can be specified in the certificate. To date, three versions have been defined. |
| Serial number | An entity that issues a certificate is responsible for specifying a serial number for the certificate, to distinguish the certificate from other certificates issued by the entity. This information is used for many purposes. For example, if a certificate is revoked, a serial number of the certificate is placed in a certificate revocation list (Certificate Revocation List, CRL). |
| Signature algorithm identifier | Identifies an algorithm used when a CA signs a certificate. |
| Issuer name | X.500 name of an entity that issues a certificate. The issuer name is usually a CA. Using the certificate means trusting the entity that issues the certificate (note: in some cases (for example, for a root CA certificate or a top-layer CA certificate), the issuer signs a certificate of the issuer). |
| Subject name | Entity name that is of a certificate and that can identify a public key of the certificate. |
| Subject public key information | Public key of a certificate subject, where an algorithm identifier specifying a public key cryptosystem to which the key belongs and all related key parameters are also included. |
| Certificate validity period | Time period in which the certificate is valid. The certificate becomes invalid after the time period. |
| Certificate signature | Information about a digital signature provided for the certificate by using a CA private key by the CA that issues the certificate. |

In addition, a network element type (network function Types, nfTypes) field may be added to an extension (extension) of the X.509 certificate. IETF RFC 9310 specifies that the X.509 v3 public key certificate described in RFC 5280 includes a certificate extension name of the network function type (nfTypes) field in the 5G system. For example, a network element certificate carries the nfTypes field to specify a network element type of a network element to which the certificate is applicable. In addition, it should be noted that in this application, the nfTypes field is not limited to be definitely located in an extension field of the certificate, and may alternatively be located in another location of the certificate. A specific location of the nfTypes field in the certificate is not limited.

4. Certificate enrollment and management framework (Certificate Enrollment and MAnagement Framework, CEMAF):
Specifically, a certificate management framework defined in a certificate management-related subject in the 3rd generation partnership project (3rd Generation Partnership Project, 3GPP) is shown in FIG. 2. FIG. 2 is a diagram of a CEMAF.

It can be learned from FIG. 2 that the CEMAF includes a certificate management network element (Certificate management Function, CeMF) and a CeEF, where the CeEF is a network element of an operator and is configured to issue a certificate. For a function of the CeEF in this application, refer to the function of the CA described above. The CeMF is a network element in a trusted domain, and there may be a plurality of CeMFs (for example, a CeMF #1, a CeMF #2, ..., and a CeMF #n shown in FIG. 2) configured to manage and apply for certificates in the CEMAF. Different CeMFs may be located in different trusted domains, or may be located in a same trusted domain.

Specifically, a communication interface (a ce1 interface shown in FIG. 2) between an NF and the CeEF is configured to register a program related to certificate provisioning and update, and a communication interface (a ce2 interface shown in FIG. 2) between the NF and the CeMF is configured to check a certificate status.

In other words, corresponding functions in the CEMAF have been divided into two network elements (for example, the CeEF and the CeMF). A registration function network element (the CeEF) of the CEMAF is configured to issue a certificate. A management network element (the CeMF) of the CEMAF is configured to manage and apply for a certificate.

It should be understood that the CeEF and the CeMF are specifically deployed in a free form. For example, the CeEF and the CeMF may be network elements in a network, or may be functions in the CA. For another example, the CeEF may alternatively be a dedicated network element specially responsible for communicating with the CA (or the RA), and is deployed in the operator network (that is, the CeEF is not included in the CA). For still another example, the CeEF and the CeMF may be deployed in a certificate network management entity. Examples are not described herein one by one.

5. Certificate update orchestrator network element (Certificate Update Orchestrator Function, CUOF): a network element configured to implement certificate update and network element certificate application.

For example, in this application, the CUOF may be equivalent to the foregoing CeMF. In this case, the CUOF in the following may be replaced with the CeMF.

For example, the CUOF may be a network element that is newly added to the foregoing CEMAF and that is configured to implement certificate update and network element certificate application, and is different from the foregoing CeMF.

For ease of description, the CUOF and the CeMF are collectively referred to as a certificate management network element in the following. The certificate management network element in this application may implement functions of the CeMF, including managing and applying for the certificate, and may also implement a function of the CUOF, including updating the certificate.

6. Service certificate: is a certificate needed by an NF for user plane or signaling plane user transmission. The service certificate may also be referred to as a formal certificate, an actual certificate, or the like. For example, the service certificate is a transport layer security (Transport Layer Security, TLS) certificate or a datagram transport layer security protocol (Datagram Transport Layer Security, DTLS) certificate needed for establishing a secure connection between NFs, or a certificate needed for establishing an internet protocol security (Internet Protocol Security, IPSEC) channel.

For example, the service certificate may be a certificate for a specific purpose (for example, encryption protection, integrity protection, or authentication), and includes but is not limited to:
a TLS client certificate (TLS client EE certificates), a TLS server certificate (TLS server EE certificates), a certificate for signing access tokens for service access authorization (Certificates for signing the access tokens for service access authorization), a certificate for encrypting hypertext transfer protocol (Hyper Text Transport Protocol, HTTP) application layer protection of messages between secure electronic payment protocols (Secure Electronic Payment Protocols, SEPPs) (Certificates for encrypting HTTP application layer protection of messages between SEPPs), a certificate for signing client credential assertion (Client credential assertion, CCA) tokens (Certificates for signing Client credential assertion (CCA) tokens (for NF consumers)), or another certificate for a specific purpose.

In addition, to facilitate understanding of embodiments of this application, the following several descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "310" and "320" are merely identifiers for ease of description, and do not limit a sequence of performing steps.

Third, in this application, a term like "example" or "for example" represents giving an example, an illustration, or a description. Any embodiment or design solution described as an "example" or "for example" in this application should not be explained as being more preferred or having more advantages than another embodiment or design solution. Exactly, use of the term like "example" or "for example" is intended to present a related concept in a specific manner.

Fourth, a "protocol" in embodiments of this application may be a standard protocol in the communication field, for example, including an LTE protocol, an NR protocol, and a related protocol applied to a future communication system. This is not limited in this application.

Fifth, in embodiments of this application, "in a case of", "when", and "if" may be used interchangeably sometimes. It should be noted that when a difference between the three is not emphasized, meanings to be expressed are consistent.

Sixth, in embodiments of this application, terms and English acronyms and abbreviations, such as radio resource control (RRC), are all examples provided for ease of description, and should not constitute any limitation on this application. This application does not exclude a possibility of defining another term that can implement same or similar functions in an existing or future protocol.

Seventh, a term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

With reference to FIG. 1, the foregoing briefly describes a scenario to which a communication method provided in embodiments of this application can be applied, describes basic concepts that may be used in embodiments of this application, and describes certificate-related concepts in the basic concepts. It should be understood that if a large quantity of NF instances and services need to simultaneously update certificates (for example, due to a same expiration date of the certificates, revocation of a certificate of a public CA, or a hazard of a used encryption algorithm), the certificate management framework may simultaneously trigger certificate update processes of all affected terminal entities. If there is no mechanism to manage this case, congestion and/or overload may be caused in an automated certificate management framework, resulting in temporary service unavailability.

Currently, a certificate update procedure is as follows: The CUOF performs the following operations, to reduce the risk of service unavailability caused by automated certificate management.
(1) Query for a certificate expiration alarm reported by a network management system.
(2) Query for a CA announcement about certificate revocation.

In the foregoing certificate update procedure, the CUOF may subscribe to a CA announcement notification to query whether data storage of the CRL or an online certificate status protocol (Online Certificate Status Protocol, OCSP) has a revoked certificate. Based on a query result, the CUOF may stagger certificate update in a timely manner, so that update of only a few certificates is simultaneously performed and is completed in specified time, especially for certificates that are about to expire. In addition, the CUOF may determine a certificate update priority for a certificate with short remaining time to expiration.

However, in the foregoing certificate update procedure, a problem that may be brought by a network element type into certificate update is not considered. For example, there are a small quantity of AMFs in the network. Even if there are no large quantity of NFs whose service certificates are simultaneously updated, all network elements that update service certificates are AMFs. As a result, there is no available AMF in the network. Network elements of different network element types are responsible for different work. Therefore, a problem occurs, which reduces availability of a core network system and even may cause a system fault.

This application provides a communication method, which may be applied to the certificate management framework shown in FIG. 2, so that a network element type of a network element is identified in a certificate update procedure, and impact of the network element type on service certificate update is considered, to avoid a system fault, and avoid impact of certificate update on a corresponding service in a network, thereby improving performance of a system.

It should be understood that the communication method provided in embodiments of this application may be applied to a 5G system, for example, a communication system shown in FIG. 1.

It should further be understood that a specific structure of an execution body of the method provided in embodiments of this application is not specifically limited in embodiments shown below, provided that a program that records code for the method provided in embodiments of this application can be run to perform communication according to the method provided in embodiments of this application. For example, the execution body of the method provided in embodiments of this application may be a network element, or a functional module that can invoke and execute a program in a network element.

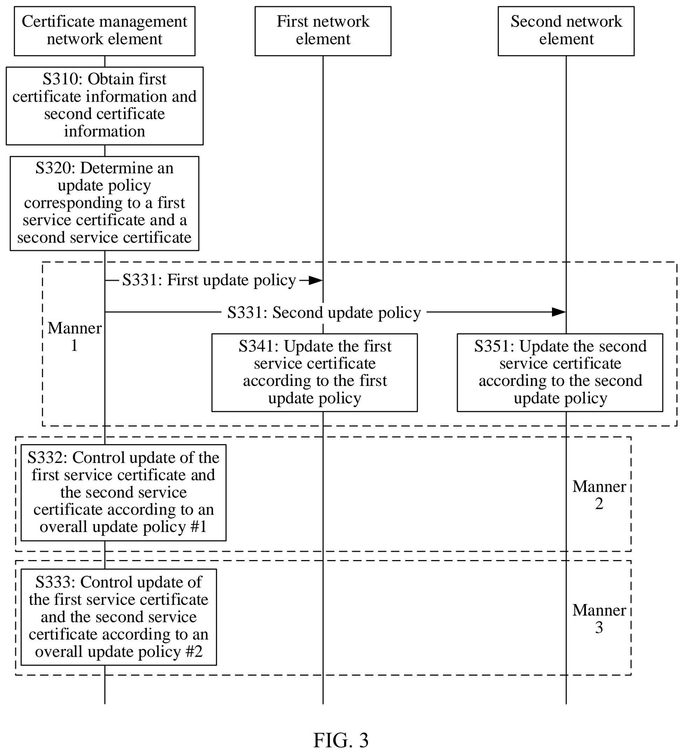

FIG. 3 is a schematic flowchart of a communication method according to this application. The following steps are included.

S310: A certificate management network element obtains first certificate information corresponding to a first service certificate of a first network element and second certificate information corresponding to a second service certificate of a second network element.

The certificate management network element in this embodiment may be a network element, for example, the CUOF or the CeMF described above, that can implement certificate update and network element certificate application. A name of the certificate management network element is not limited in this embodiment.

The first service certificate of the first network element is a service certificate needed by the first network element, for example, a TLS certificate or a DTLS certificate needed for establishing a secure connection between the first network element and another network element, a certificate needed for establishing an IPSEC channel, or a certificate for a specific purpose (for example, encryption protection, integrity protection, or authentication). Similarly, the second service certificate of the second network element is a service certificate needed by the second network element, for example, a TLS certificate needed for establishing a secure connection between the second network element and another network element, a certificate needed for establishing an IPSEC channel, or a certificate for a specific purpose (for example encryption protection, integrity protection, or authentication).

It should be understood that a specific form of the service certificate is not limited in this embodiment, and the service certificate may be a service certificate defined in an existing protocol or introduced in a future protocol.

Specifically, the first certificate information includes a validity period of the first service certificate and information about a network element type of the first network element, and the second certificate information includes a validity period of the second service certificate and information about a network element type of the second network element.

For example, the validity period of the first service certificate may be indicated in the following manner: expiration time of the first service certificate, validity duration of the first service certificate, time to expiration of the first service certificate, or the like. The expiration time, the time to expiration, or the like may be absolute time or relative time. This is not limited in this embodiment. The validity period of the second service certificate may be indicated in the following manner: expiration time of the second service certificate, validity duration of the second service certificate, time to expiration of the second service certificate, or the like.

For example, the validity period of the first service certificate is as follows: The first service certificate expires on January 1, 2020, indicating that the validity period of the first service certificate lasts until December 31, 2019. For another example, the validity period of the first service certificate is as follows: The validity duration of the first service certificate is three months, indicating that the validity period of the first service certificate is three months starting from an issuance moment. For still another example, the validity period of the first service certificate is as follows: The time to expiration of the first service certificate is December 31, 2019, indicating that the validity period of the first service certificate lasts until December 31, 2019.

For example, information about a network element type of a network element may be an identifier (identifier, ID) of the network element type. For example, if the network element type of the first network element is an AMF, the information about the network element type of the first network element is information indicating the AMF; or if the network element type of the second network element is an AMF, the information about the network element type of the second network element is information indicating the AMF.

In this embodiment, a division manner of the network element type of the network element includes but is not limited to: division based on service functions, division based on deployment locations, division based on home domains, or the like. For example, the division based on the service functions may mean that a network element type like an SMF or the AMF is obtained through division. For another example, the division based on the deployment locations may mean that an access network element or a non-access network element is obtained through division. For still another example, the division based on the home domains may mean that a visited network element or a home network element is obtained through division.

It should be noted that the first certificate information may further include other information in addition to the validity period of the first service certificate and the information about the network element type of the first network element. For example, the first certificate information further includes other information related to the first service certificate, such as an identifier of the first network element, a version of the first service certificate, and issuer information of the first service certificate. This is not limited in this embodiment. The second certificate information may further include other information in addition to the validity period of the second service certificate and the information about the network element type of the second network element. For example, the second certificate information further includes other information related to the second service certificate, such as an identifier of the second network element, a version of the second service certificate, and issuer information of the second service certificate. This is not limited in this embodiment.

In this embodiment, a manner in which certificate information (for example, the first certificate information or the second certificate information) carries the information about the network element type of the network element includes but is not limited to the following two possible implementations.

In one possible implementation, the certificate information may explicitly carry the information about the network element type of the network element. For example, that the first certificate information includes the information about the network element type of the first network element is: The first certificate information carries an indication field #1 (for example, an nfTypes field #1), where the indication field #1 indicates the network element type of the first network element. For another example, that the second certificate information includes the information about the network element type of the second network element is: The second certificate information carries an indication field #2 (for example, an nfTypes field #2), where the indication field #2 indicates the network element type of the second network element.

In the other possible implementation, the certificate information may implicitly carry the information about the network element type of the network element. For example, the first certificate information includes the first service certificate, and a network element type nfTypes field of the first service certificate includes the information about the network element type of the first network element. For another example, the second certificate information includes the second service certificate, and a network element type nfTypes field of the second service certificate includes the information about the network element type of the second network element. In this implementation, the certificate management network element may obtain the information about the network element type of the first network element from the network element type nfTypes field of the first service certificate, and obtain the information about the network element type of the second network element from the network element type nfTypes field of the second service certificate.

It should be understood that the foregoing two possible implementations of carrying the information about the network element type of the network element are merely examples for describing the manner of carrying the information about the network element type of the network element, and do not constitute any limitation on the protection scope of this application. Other manners in which the certificate information carries the information about the network element type of the network element also fall within the protection scope of this application. For example, the certificate information carries indication information #1, and the indication information #1 indicates the certificate management network element to obtain, from a specific network element, information about a network element type of the network element.

It should be further understood that in step S310 in this embodiment, the certificate management network element obtains the first certificate information corresponding to the first service certificate of the first network element and the second certificate information corresponding to the second service certificate of the second network element, which is merely an example, and does not constitute any limitation on the protection scope of this application. The certificate management network element may further obtain information about a service certificate of another network element. For example, the certificate management network element may further obtain third certificate information corresponding to a third service certificate of a third network element, where the third network element may be a network element whose network element type is the same as or different from the network element type of the first network element. Examples are not described herein one by one.

In this embodiment, a manner in which the certificate management network element obtains the certificate information includes but is not limited to the following several possible implementations.

In a possible implementation, the certificate management network element may obtain the first certificate information in a first service certificate request procedure of the first network element, and obtain the second certificate information in a second service certificate request procedure of the second network element.

For example, the certificate management network element receives and stores the first certificate information in the service certificate request procedure of the first network element, and receives and stores the second certificate information in the service certificate request procedure of the second network element. In this application, a time sequence relationship between initiating a certificate request by the first network element and initiating a certificate request by the second network element is not limited.

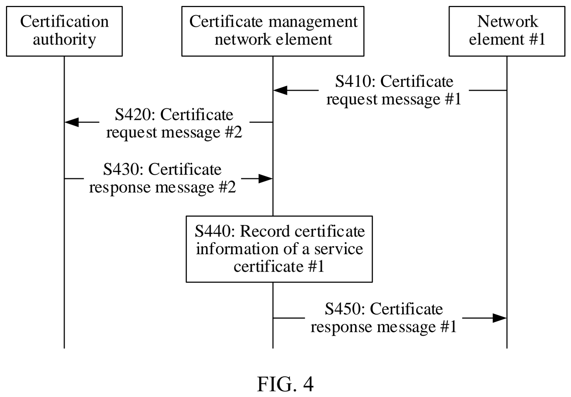

For ease of understanding, with reference to FIG. 4, the following describes in detail how the certificate management network element obtains certificate information corresponding to a service certificate of a network element (for example, the first network element or the second network element) in a service certificate request procedure of the network element. Details are not described herein again.

In another possible implementation, the certificate management network element may obtain the first certificate information and the second certificate information through query via an OAM device. For example, in this implementation, the certificate management network element obtains the first certificate information and the second certificate information from the OAM by using a query request message.

In still another possible implementation, the certificate management network element obtains, by using a subscription procedure or a query procedure, information push of the service certificate of the network element. For example, in this implementation, by using subscription request messages, the certificate management network element subscribes to the first certificate information and the second certificate information from the first network element and the second network element respectively. For another example, by using query request messages, the certificate management network element queries the first network element and the second network element for the first certificate information and the second certificate information respectively.

It should be noted that the foregoing several implementations in which the certificate management network element obtains the certificate information are merely examples for describing how the certificate management network element obtains certificate information corresponding to service certificates of different network elements, and do not constitute any limitation on the protection scope of this application. The certificate management network element may alternatively obtain certificate information corresponding to service certificates of different network elements in another manner. Examples are not described herein one by one.

For example, after obtaining certificate information corresponding to service certificates of different network elements, the certificate management network element may locally maintain a mapping table between the different network elements and the certificate information.

For example, if the certificate management network element obtains the first certificate information corresponding to the first service certificate of the first network element and the second certificate information corresponding to the second service certificate of the second network element, a mapping table locally maintained by the certificate management network element is shown in the following Table 2.

**Table 2:**

| Network element number (optional) | Network element identifier | Network element type | Certificate expiration time | Certificate ID (optional) |
|---|---|---|---|---|
| 1 | NF1:319000 | AMF | 20220303 | 319000acb234ff |
| 2 | NF2:319001 | AMF | 20220305 | 319000acb234fd |

In Table 2, NF1 is the first network element, NF2 is the second network element, and both the first network element and the second network element are AMFs.

For example, the certificate management network element may further obtain and store the third certificate information corresponding to the third service certificate of the third network element. For example, a mapping table locally maintained by the certificate management network element is shown in the following Table 3.

**Table 3:**

| Network element number (optional) | Network element identifier | Network element type | Certificate expiration time | Certificate ID (optional) |
|---|---|---|---|---|
| 1 | NF1:319000 | AMF | 20220303 | 319000acb234ff |
| 2 | NF2:319001 | AMF | 20220305 | 319000acb234fd |
| 3 | NF3:319002 | SMF | 20221009 | 319000acb234aa |

In Table 3, NF1 is the first network element, NF2 is the second network element, NF3 is the third network element, both the first network element and the second network element are AMFs, and the third network element is an SMF, and is a network element whose type is different from the type of the first network element or the second network element.

S320: The certificate management network element determines an update policy corresponding to the first service certificate and the second service certificate.

Specifically, in this embodiment, when determining, based on the information about the network element type of the first network element and the information about the network element type of the second network element, that the network element types of the first network element and the second network element are the same, and determining, based on the validity period of the first service certificate and the validity period of the second service certificate, that the first service certificate and the second service certificate need to be updated, the certificate management network element determines the update policy corresponding to the first service certificate and the second service certificate.

In this embodiment, the certificate management network element may determine, based on the information about the network element type of the first network element and the information about the network element type of the second network element, that the network element types of the first network element and the second network element are the same. For example, the certificate management network element determines that both the first network element and the second network element are AMFs; the certificate management network element determines that both the first network element and the second network element are SMFs; the certificate management network element determines that both the first network element and the second network element are DUs; or the certificate management network element determines that both the first network element and the second network element are CUs.

It should be noted that in this embodiment, that the network element types of the first network element and the second network element are the same may be understood as that the first network element and the second network element are responsible for same work in a system, but specific network element types of the first network element and the second network element are not limited.

For example, that the certificate management network element determines, based on the validity period of the first service certificate and the validity period of the second service certificate, that the first service certificate and the second service certificate need to be updated includes: The certificate management network element determines, based on the validity period of the first service certificate and the validity period of the second service certificate, that a time interval between the expiration time of the first service certificate and the expiration time of the second service certificate is less than a first preset threshold.

That the time interval between the expiration time of the first service certificate and the expiration time of the second service certificate is less than the first preset threshold indicates that time at which the first service certificate needs to be updated is close to time at which the second service certificate needs to be updated. If the first service certificate and the second service certificate are updated based on the time at which the first service certificate needs to be updated and the time at which the second service certificate needs to be updated, time in which the first network element is in a certificate update state and time in which the second network element is in a certificate update state may overlap or partially overlap.

It should be understood that in this embodiment, that the certificate management network element determines, based on a validity period of the service certificate, that the service certificate needs to be updated is merely an example. The certificate management network element may alternatively determine, in another manner, that the service certificate needs to be updated. For example, that the certificate management network element determines that the first service certificate and the second service certificate need to be updated may alternatively be: It is considered that the first service certificate and the second service certificate need to be replaced because a root certificate of a public CA is revoked or a used encryption algorithm is outdated.

For example, in this embodiment, that the certificate management network element determines the update policy corresponding to the first service certificate and the second service certificate includes the following several manners.

Manner 1: The certificate management network element determines a first update policy corresponding to the first service certificate, and determines a second update policy corresponding to the second service certificate.

Specifically, the first update policy indicates update time of the first service certificate, the second update policy indicates update time of the second service certificate, and the update time of the first service certificate is different from the update time of the second service certificate.

For example, that the first update policy indicates the update time of the first service certificate includes the following content.

The first update policy includes the update time of the first service certificate, where the update time of the first service certificate is absolute time or relative time. For example, the update time of the first service certificate is an absolute first moment, or the update time of the first service certificate is a moment that is first duration later from when the first network element receives the first update policy.

Similarly, that the second update policy indicates the update time of the second service certificate includes the following content.

The second update policy includes the update time of the second service certificate, where the update time of the second service certificate is absolute time or relative time. For example, the update time of the second service certificate is the absolute first moment, or the update time of the second service certificate is a moment that is second duration later from when the second network element receives the second update policy.

In this embodiment, the update time of the first service certificate determined by the certificate management network element is earlier than the expiration time of the first service certificate, the update time of the second service certificate determined by the certificate management network element is earlier than the expiration time of the second service certificate, the update time of the first service certificate is different from the update time of the second service certificate, and the expiration time of the first service certificate is close to or the same as the expiration time of the second service certificate. This can ensure that the first service certificate and the second service certificate can be updated before expiration, and are not simultaneously updated.

In a possible implementation, the update time of the first service certificate is time #1, the update time of the second service certificate is time #2, and the time #1 is different from the time #2.

In another possible implementation, the update time of the first service certificate is a slot #1, the update time of the second service certificate is a slot #2, and the slot #1 is different from the slot #2.

For example, in this embodiment, the certificate management network element may determine certificate update policies of different network elements based on the locally maintained mapping table (for example, the foregoing Table 2 or Table 3). For example, the certificate management network element determines update policies of service certificates of different network elements based on expiration time of the service certificates of the different network elements.

Optionally, there is an interval of first duration between the update time of the first service certificate and the update time of the second service certificate, and the first duration is greater than or equal to duration for obtaining an updated service certificate by the first network element or the second network element. For example, if duration for obtaining an updated first service certificate by the first network element is duration #1, and duration for obtaining an updated second service certificate by the second network element is duration #2, the first duration is greater than or equal to the duration #1 or the duration #2. For another example, the first duration is greater than or equal to an average value of the duration #1 and the duration #2.

Further, in a case shown in Manner 1, after determining the update policies of the service certificates of the different network elements, the certificate management network element sends update policy messages to the network elements, to indicate the policies for updating the certificates of the network elements, so that the different network elements may perform service certificate update according to different update policies. In this case, in the case shown in Manner 1, a method procedure shown in FIG. 3 further includes the following steps.

S331: The certificate management network element sends the first update policy to the first network element, and sends the second update policy to the second network element.

It should be understood that how the certificate management network element sends an update policy of a service certificate to a network element is not limited in this embodiment. The update policy of the service certificate may be transmitted through a communication interface between the certificate management network element and the network element, for example, transmitted through a service-based interface (Service interface, SBI) or a southbound interface of a network management system. The southbound interface of the network management system is an interface for the network management system to connect to a device, and is configured to manage the device.

S341: The first network element updates the first service certificate according to the first update policy.

Specifically, in this embodiment, after receiving the first update policy, the first network element updates the first service certificate according to the first update policy. For example, the first network element initiates a service certificate update procedure at the update time of the first service certificate.

For example, that the first network element initiates the service certificate update procedure at the update time of the first service certificate includes: sending an update request message for the first service certificate to a certificate enrollment network element at the update time of the first service certificate.

In this embodiment, that the first network element sends the update request message for the first service certificate to the certificate enrollment network element includes the following two possible implementations.

In one possible implementation, the first network element may directly send the update request message for the first service certificate to the certificate enrollment network element, to initiate an update procedure of the first service certificate.

In the other possible implementation, the first network element may indirectly (for example, via a certificate management network element #1) send the update request message for the first service certificate to the certificate enrollment network element, to initiate an update procedure of the first service certificate. The certificate management network element #1 may be the foregoing certificate management network element that provides the first update policy, or may be a certificate management network element different from the foregoing certificate management network element that provides the first update policy. This is not limited in this embodiment.

S351: The second network element updates the second service certificate according to the second update policy.

Specifically, in this embodiment, after receiving the second update policy, the second network element updates the second service certificate according to the second update policy. For example, the second network element initiates a service certificate update procedure at the update time of the second service certificate.

For example, that the second network element initiates the service certificate update procedure at the update time of the second service certificate includes: sending an update request message for the second service certificate to the certificate enrollment network element at the update time of the second service certificate.

In this embodiment, that the second network element sends the update request message for the second service certificate to the certificate enrollment network element includes the following two possible implementations.

In one possible implementation, the second network element may directly send the update request message for the second service certificate to the certificate enrollment network element, to initiate an update procedure of the second service certificate.

In the other possible implementation, the second network element may indirectly (for example, via a certificate management network element #2) send the update request message for the second service certificate to the certificate enrollment network element, to initiate an update procedure of the second service certificate. The certificate management network element #2 may be the foregoing certificate management network element that provides the second update policy, or may be a certificate management network element different from the foregoing certificate management network element that provides the second update policy. This is not limited in this embodiment.

In the case shown in Manner 1, the update policy formulated by the certificate management network element may be: formulating the first update policy for the first service certificate, and formulating the second update policy for the second service certificate. Specifically, the first update policy indicates the update time of the first service certificate, the second update policy indicates the update time of the second service certificate, and the update time of the first service certificate is different from the update time of the second service certificate. The certificate management network element sends the first update policy and the second update policy to the first network element and the second network element respectively, so that the first network element and the second network element initiate service certificate update at different occasions, to avoid that the first network element and the second network element simultaneously perform service certificate update.

Manner 2: The certificate management network element determines an overall update policy corresponding to the first service certificate and the second service certificate.

For ease of differentiation, in a case shown in Manner 2, the overall update policy determined by the certificate management network element is denoted as an overall update policy #1. Specifically, the overall update policy #1 indicates update time of the first service certificate and update time of the second service certificate, and the update time of the first service certificate is different from the update time of the second service certificate.

It should be noted that the update time of the first service certificate and the update time of the second service certificate that are determined by the certificate management network element in the case shown in Manner 2 are the same as the update time of the first service certificate and the update time of the second service certificate that are determined by the certificate management network element in the case shown in Manner 1. Details are not described herein again.

A difference between Manner 2 and Manner 1 is as follows.

In the case shown in Manner 2, after determining the update time of the first service certificate and the update time of the second service certificate, the certificate management network element does not need to provide the update policy for the first network element and the second network element, but controls update of the first service certificate and the second service certificate according to the overall update policy #1.

Specifically, in the case shown in Manner 2, a method procedure shown in FIG. 3 further includes the following step.

S332: The certificate management network element controls the update of the first service certificate and the second service certificate according to the overall update policy #1.

If the certificate management network element receives, from the first network element before the update time of the first service certificate, a first request message for requesting to update the first service certificate, the certificate management network element rejects responding to the first request message.

If the certificate management network element receives, from the second network element before the update time of the second service certificate, a second request message for requesting to update the second service certificate, the certificate management network element rejects responding to the second request message.

That the certificate management network element responds to an update request message for the service certificate of the network element (for example, the first network element or the second network element) specifically includes: requesting, in place of the network element, the certificate enrollment network element to update the certificate.

In the case shown in Manner 2, the update policy formulated by the certificate management network element may be: formulating the overall update policy for the first service certificate and the second service certificate, where the overall update policy indicates the update time of the first service certificate and the update time of the second service certificate, and the update time of the first service certificate is different from the update time of the second service certificate. After formulating the overall update policy, the certificate management network element controls the update of the first service certificate and the update of the second service certificate according to the overall update policy, to avoid that the first network element and the second network element simultaneously perform service certificate update.

Manner 3: The certificate management network element determines an overall update policy #2 corresponding to the first service certificate and the second service certificate.

The overall update policy #2 indicates to control update of the first service certificate and the second service certificate based on a quantity of online network elements in a plurality of network elements corresponding to the network element type, the plurality of network elements corresponding to the network element type further include N online third network elements in addition to the first network element and the second network element, and N is a positive integer.

For example, a service certificate of an online network element is in a used state. If a service certificate of a network element is in an unusable state (for example, an updating state), the network element is not an online network element.

Specifically, in a case shown in Manner 3, a method procedure shown in FIG. 3 further includes the following step.

S333: The certificate management network element controls the update of the first service certificate and the second service certificate according to the overall update policy #2.

If N is greater than a second preset threshold, it is determined that the first service certificate and the second service certificate can be simultaneously updated.

If N is less than or equal to the second preset threshold, it is determined that the first service certificate and the second service certificate cannot be simultaneously updated.

It should be understood that the second preset threshold may be predefined, and indicates the quantity of online network elements in the network elements of the network element type in the system. If the quantity of online network elements is less than the second preset threshold, availability of the system may be reduced, and even a system fault may be caused. A specific value of the second preset threshold is not limited in this embodiment.

For example, if the certificate management network element determines that the first service certificate and the second service certificate cannot be simultaneously updated, when the certificate management network element simultaneously receives, from the first network element, a first request message for requesting to update the first service certificate, and receives, from the second network element, a second request message for requesting to update the second service certificate, the certificate management network element determines to reject responding to the first request message and/or the second request message. For example, the certificate management network element sends a rejection response #1 to the first network element, and sends a rejection response #2 to the second network element.

For example, if the certificate management network element determines that the first service certificate and the second service certificate can be simultaneously updated, when the certificate management network element simultaneously receives, from the first network element, the first request message for requesting to update the first service certificate, and receives, from the second network element, the second request message for requesting to update the second service certificate, the certificate management network element determines to respond to the first request message and/or the second request message. For example, the certificate management network element requests, in place of the network element, the certificate enrollment network element to update the certificate.

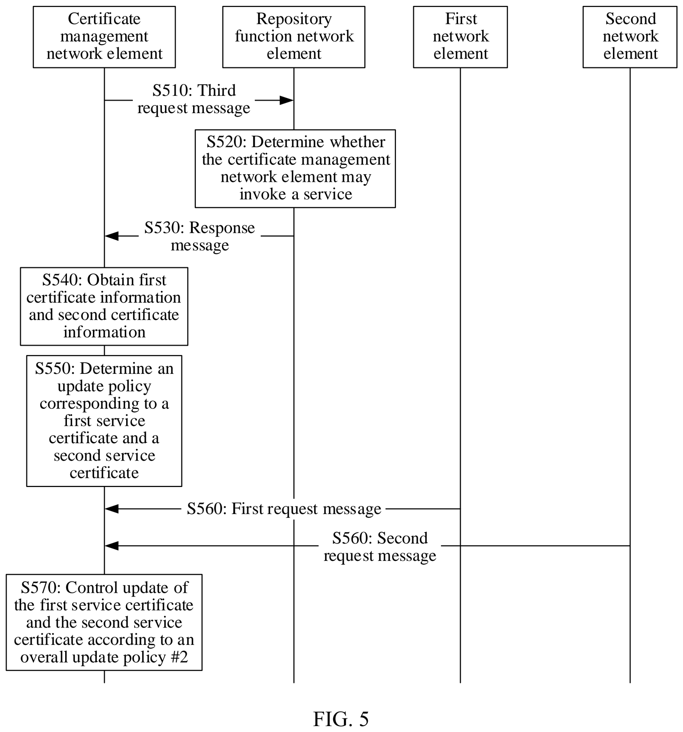

It can be learned from the foregoing that, in the case shown in Manner 3, the certificate management network element may control the update of the first service certificate and the second service certificate based on the quantity of online network elements in the plurality of network elements corresponding to the network element type. Optionally, the certificate management network element may obtain, from a repository function network element (for example, an NRF), information about a plurality of network elements corresponding to different network element types. For ease of understanding, the following describes in detail, with reference to FIG. 5, a procedure in which the certificate management network element obtains, from the repository function network element, the information about the plurality of network elements corresponding to the different network element types, and determines, according to the overall update policy #2, whether to respond to the update request message for the service certificate of the network element. Details are not described herein.

In the case shown in Manner 3, the update policy formulated by the certificate management network element may be: formulating the overall update policy for the first service certificate and the second service certificate, where the overall update policy indicates to control the update of the first service certificate and the second service certificate based on a situation of the plurality of network elements corresponding to the network element type. After formulating the overall update policy, the certificate management network element controls the update of the first service certificate and the update of the second service certificate according to the overall update policy, to avoid that the first network element and the second network element simultaneously perform service certificate update.

In the communication method shown in FIG. 3, the certificate management network element may determine update policies of service certificates of different network elements based on network element types of the network elements. In this way, network elements of a specific type in the system do not simultaneously perform service certificate update, and there is an available network element of this type in a network, to improve the availability of the system, and avoid the system fault.

It can be learned from step S310 that the certificate management network element may obtain information about a service certificate of a network element (for example, the first network element or the second network element) in a service certificate request procedure of the network element. The following provides detailed descriptions with reference to FIG. 4.

FIG. 4 is a schematic flowchart of a service certificate request procedure according to this application. The following steps are included.

S410: A network element #1 sends a certificate request message #1 to a certificate management network element.

The network element #1 may be the first network element, the second network element, or another network element. This is not limited in this embodiment.

The certificate request message #1 is for requesting to issue a service certificate #1. The certificate request message #1 includes an identifier #1 of the network element #1. The identifier #1 of the network element #1 is an identifier (identifier, ID) for applying for the service certificate by the network element #1, which may be an instance (instance) ID of the network element, may be a sender (sender) ID in a certificate request, may be content in a subject name (Subject alt Name), or may be an IP address of the network element or any ID that can identify an instance of the network element #1 in a period of time.

S420: The certificate management network element sends a certificate request message #2 to a certification authority.

The certificate request message #2 is for requesting to issue the service certificate #1. The certificate request message #2 includes an identifier #2 of the network element #1, and the identifier #2 of the network element #1 is the same as or different from the identifier #1 of the network element #1 carried in the certificate request message #1 in step S410. For example, the identifier #1 of the network element #1 is an instance ID of an NF in a network, and the identifier #2 of the network element #1 is a sender ID for identifying the NF by the certification authority.

In this embodiment, the certification authority may be a network element that issues a certificate, for example, a CA or an RA.

S430: The certification authority sends a certificate response message #2 to the certificate management network element.

Specifically, the certificate response message #2 includes the service certificate #1, the identifier of the network element #1, and information about a network element type of the network element #1. For example, if the network element #1 is the first network element in the communication method shown in FIG. 3, the service certificate #1 is the first service certificate, and the information about the network element type of the network element #1 is the information about the network element type of the first network element. For another example, if the network element #1 is the second network element in the communication method shown in FIG. 3, the service certificate #1 is the second service certificate, and the information about the network element type of the network element #1 is the information about the network element type of the second network element.

The service certificate #1 may be a TLS certificate, an IPSEC certificate, or a certificate of a virtual machine or a container. This is not limited in this application.

The identifier of the network element #1 is for identifying the network element #1, and may be the identifier #2 of the network element #1 carried in step S420.

Optionally, the identifier of the network element #1 may be explicitly carried, or may be carried in the service certificate #1. For example, a part or all of content in a Subject Alt Name (SAN) field or a sender ID field may be considered as the identifier of the network element #1.

The network element type of the network element #1 may be an AMF, an SMF, or the like. Optionally, an NF type in an extension (extension) field of the service certificate #1 may be considered as carrying the information about the network element type of the network element #1.

S440: The certificate management network element records certificate information of the service certificate #1.

Specifically, the certificate management network element records the identifier of the network element #1 corresponding to the service certificate #1, the network element type of the network element #1, expiration time of the service certificate #1, and the like.

In a possible implementation, if the certificate response message #2 carries the identifier of the network element #1, the certificate management network element may directly obtain the identifier of the network element #1 from the certificate response message #2.

In another possible implementation, if the certificate response message #2 does not carry the identifier of the network element #1, and the identifier of the network element #1 and the service certificate #1 are carried together, the certificate management network element may obtain the identifier of the network element #1 based on the Subject Alt Name (SAN) field of the service certificate #1.

In a possible implementation, if the certificate response message #2 carries the information about the network element type of the network element #1, the certificate management network element may directly obtain the network element type of the network element #1 from the certificate response message #2.

In another possible implementation, if the certificate response message #2 does not carry the information about the network element type of the network element #1, and the information about the network element type of the network element #1 is carried in combination with the service certificate #1, the certificate management network element may obtain the network element type of the network element #1 from the extension (extension) field (for example, an nfTypes field) of the service certificate #1.

In addition, it should be noted that when the certificate management network element cannot obtain one or more of the foregoing information such as the identifier of the network element #1, the network element type of the network element #1, and the expiration time of the service certificate #1, the certificate management network element may request a corresponding network element to provide unobtained information. For example, the certificate management network element may send a supplement request message to the certification authority or the corresponding network element (for example, the network element #1), to request to provide the unobtained information as a supplement.

S450: The certificate management network element sends a certificate response message #1 to the network element #1.

The certificate response message #1 includes the service certificate #1 and the identifier of the network element #1.

In the service certificate request procedure shown in FIG. 4, the certificate management network element may receive information about a service certificate of a network element from the certification authority. When information about a network element type of the network element is not displayed in the certificate response message #2 sent by the certification authority, the certificate management network element may extract and record the information about the network element type of the network element from a network element type nfTypes field of the service certificate.

This application further provides a communication method. A certificate management network element does not need to preconfigure an update policy for a service certificate of a network element, but directly determines, based on a query result of a repository function network element when the network element initiates service certificate update, whether to agree with a service certificate update procedure of the network element. In this way, network elements of a specific type in a system do not simultaneously perform service certificate update, and there is an available network element of this type in a network, to improve availability of the system, and avoid a system fault. The following describes in detail the communication method with reference to FIG. 5.

FIG. 5 is a schematic flowchart of another communication method according to this application. The following steps are included.

S510: A certificate management network element sends a third request message to a repository function network element.

The third request message is for requesting to obtain information about network elements corresponding to different network element types. For example, the third request message is for requesting to obtain information about an AMF, information about an SMF, and the like.

For example, the repository function network element in this embodiment may be an NRF. After a network element goes online, the network element registers with the NRF by using a registration message (for example, Nnrf_NF Management_NF Register request). Therefore, the NRF may record addition of the network element of a specific network element type. The NRF learns of the information about the network elements corresponding to the different network element types by using the foregoing method.

The third request message may be a discovery request message or a subscription request message. If the third request message is the subscription request message, it may be understood that the NRF has a new subscription function for the certificate management network element to make the NRF feed back the information about the network elements corresponding to the different network element types. Network element information may be one or more of an instance ID, a fully qualified domain name (Fully Qualified Domain Name, FQDN), or internet protocol IP address information.

The third request message includes an identifier of the certificate management network element and information about at least one network element type, and is for requesting the repository function network element to provide a quantity of network elements respectively corresponding to the at least one network element type. The identifier of the certificate management network element is for directly or indirectly identifying an identity of the certificate management network element. For example, the identifier of the certificate management network element may be an instance ID of the certificate management network element, an NF type of the certificate management network element, or an identifier of a public land mobile network (Public Land Mobile Network, PLMN) in which the certificate management network element is located. For another example, the identifier of the certificate management network element may be an identifier that combines a plurality of parameters. For example, the identifier of the certificate management network element includes the NF type of the certificate management network element and the identifier of the PLMN in which the certificate management network element is located. For example, a network element type of the certificate management network element is a management network element, and a PLMN ID is 001, indicating that the certificate management network element is a certificate management network element located in a PLMN 001.

Optionally, the third request message further includes information about a first area, to request to obtain information about network elements corresponding to different network element types in the first area. For example, the third request message includes an IP address of the certificate management network element.

For example, if the third request message is the subscription request message, a subscription event may be information about network elements corresponding to a plurality of different network element types.

S520: The repository function network element determines whether the certificate management network element may invoke a service.

In a possible implementation, the repository function network element preconfigures a correspondence between the information about the first area and the identifier (for example, the instance ID of the certificate management network element or the IP address of the certificate management network element) of the certificate management network element that may invoke the service. If the identifier of the certificate management network element that sends the third request message is one of identifiers of a plurality of certificate management network elements corresponding to the first area, the repository function network element determines, based on the correspondence, that the third request message may be responded to.

In another possible implementation, the identifier of the certificate management network element includes the NF type and the PLMN ID. In this case, the repository function network element determines, by using the NF type and the PLMN ID, whether the certificate management network element can request information about a network element in the PLMN identified by the PLMN ID or an area. If whether the certificate management network element that sends the third request message can request the information about the network element in the PLMN identified by the PLMN ID or the area, the repository function network element determines, based on a correspondence, that the third request message may be responded to.

S530: The repository function network element sends a response message to the certificate management network element.

The response message includes the information about the network elements corresponding to the different network element types.

For ease of description, in this embodiment, an example in which the response message includes information about a network element corresponding to a network element type #1 is used. The first network element and the second network element in the communication method shown in FIG. 3 belong to the network element type #1.

S540: The certificate management network element obtains first certificate information corresponding to a first service certificate of the first network element and second certificate information corresponding to a second service certificate of the second network element.

Specifically, for a manner in which the certificate management network element obtains certificate information, refer to descriptions of step S310. Details are not described herein again.

S550: The certificate management network element determines an update policy corresponding to the first service certificate and the second service certificate.

In the communication method shown in FIG. 5, that the certificate management network element determines the update policy corresponding to the first service certificate and the second service certificate includes: The certificate management network element determines an overall update policy #2 corresponding to the first service certificate and the second service certificate. The overall update policy #2 indicates to control update of the first service certificate and the second service certificate based on a quantity of online network elements in a plurality of network elements corresponding to the network element type.

S560: The certificate management network element receives a first request message from the first network element, and receives a second request message from the second network element.

The first request message is for requesting to update the first service certificate, and the second request message is for requesting to update the second service certificate.

In a possible implementation, the certificate management network element may determine, based on expiration time of a service certificate, to send an update notification #1 to the first network element when the first service certificate of the first network element is about to expire, to indicate the first network element to initiate a service certificate update procedure; and send an update notification #2 to the second network element when the second service certificate of the second network element is about to expire, to indicate the second network element to initiate a service certificate update procedure.

In another possible implementation, the first network element and the second network element may initiate service certificate update procedures by themselves. For example, when the first service certificate is about to expire, the first network element initiates the service certificate update procedure; and when the second service certificate is about to expire, the second network element initiates the service certificate update procedure.

S570: The certificate management network element controls the update of the first service certificate and the second service certificate according to the overall update policy #2.

Specifically, the certificate management network element may control the update of the first service certificate and the second service certificate based on the quantity of online network elements in the plurality of network elements corresponding to the network element type.

In a possible implementation, the information about the network elements corresponding to the different network element types obtained by the certificate management network element from the NRF by using steps S510 to S530 includes identifiers of the network elements corresponding to the different network element types.

In this way, the certificate management network element may record a total quantity of online network elements corresponding to the different network element types. For example, the information about the different network elements that is locally maintained by the certificate management network element is shown in the following Table 4.

**Table 4:**

| Network element type | Quantity of online network elements |
|---|---|
| AMF | 4 |
| SMF | 0 |
| UPF | 1 |

A certificate of the online network element is in a used state (or is normal).

In this implementation, after receiving the first request message of the first network element corresponding to the network element type #1 and receiving the second request message from the second network element corresponding to the network element type #1, the certificate management network element determines whether a quantity of online network elements corresponding to the network element type #1 meets a requirement if the first network element and the second network element simultaneously perform service certificate update.

For ease of understanding, how the certificate management network element controls the update of the first service certificate and the second service certificate according to the overall update policy #2 is described with reference to a specific example.

Example 1: Both the first network element and the second network element are AMFs, and it is specified that more than one AMF (at least two AMFs) needs to be in an online state in a system.

In a case shown in Example 1, if the certificate management network element simultaneously receives the first request message of the first network element and the second request message of the second network element, according to a case shown in Table 4, there are four online AMFs in total. Even if the first network element and the second network element simultaneously perform service certificate update, there are still (4-2=2) AMFs in the online state in the system, which meets the requirement.

In this case, the first network element and the second network element may simultaneously perform service certificate update, that is, the certificate management network element may respond to the first request message and the second request message.

It should be noted that after responding to the first request message and the second request message, the certificate management network element may update the foregoing Table 4. The quantity of online AMFs should decrease by 2. In this case, the foregoing Table 4 is updated to the following Table 5.

**Table 5:**

| Network element type | Quantity of online network elements |
|---|---|
| AMF | 2 |
| SMF | 0 |
| UPF | 1 |

In another possible implementation, the information about the network elements corresponding to the different network element types obtained by the certificate management network element from the NRF by using steps S510 to S530 includes identifiers of the network elements corresponding to the different network element types. The certificate management network element may obtain and record certificate statuses of different network elements based on identifiers of the different network elements.

In this way, the certificate management network element may record certificate statuses of the network elements corresponding to the different network element types. For example, the information about the different network elements that is locally maintained by the certificate management network element is shown in the following Table 6.

**Table 6:**

| NF identifier | NF type | Certificate status |
|---|---|---|
| 1001 | AMF | About to expire |
| 1002 | AMF | Updating |
| 1003 | AMF | Normal |
| 1004 | AMF | Updating |

A certificate status of an online network element is a used state (or is normal).

Optionally, the certificate management network element determines to respond to a certificate update request message, and sends the certificate update request message to the certification authority to perform certificate update. If a table locally maintained by the certificate management network element is the foregoing Table 4, after the first network element and the second network element complete the certificate update, the quantity of online network elements corresponding to the AMF may increase by 2. If the table locally maintained by the certificate management network element is the foregoing Table 6, certificate statuses corresponding to the first network element and the second network element are changed to normal.

If the certificate management network element determines to reject a certificate update request, the certificate management network element sends a certificate rejection response to the network element (the first network element and the second network element). The rejection response may carry a cause value. For example, the cause value indicates that certificate update cannot be performed in a current time period, and needs to be retried after waiting.

For example, the certificate management network element sends a rejection response #1 to the first network element, where the rejection response #1 carries indication information, to indicate the first network element to re-initiate a certificate update request after waiting for first duration; and the certificate management network element sends a rejection response #2 to the second network element, where the rejection response #2 carries indication information, to indicate the second network element to re-initiate a certificate update request after waiting for second duration. The first duration is different from the second duration.

In addition, it should be noted that in the communication method shown in FIG. 5, the certificate management network element may control the service certificate update of the first network element and the second network element based on the quantity of online network elements corresponding to the network element type #1, which is merely an example. In this embodiment, the certificate management network element alternatively controls a single network element to initiate service certificate update according to the overall update policy #2. For example, the certificate management network element obtains, by using steps S510 to S530, that the quantity of online AMFs is M (as shown in the foregoing Table 4). After an AMF initiates a certificate update procedure, a quantity of unavailable AMFs locally maintained by the certificate management network element increases by 1 (or the quantity of online AMFs decreases by 1). When the quantity of unavailable AMFs is close to or equal to the total quantity M of AMFs, the certificate management network element rejects responding to the certificate update request of the network element.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description (for example, the certificate management network element, the first network element, the second network element, or the repository function network element). It should be understood that a specific form of the device is not limited in embodiments of this application. For example, all devices that can implement a same function in the future are applicable to embodiments of this application.

It may be understood that in the foregoing method embodiments, methods and operations implemented by a device (for example, the certificate management network element, the first network element, the second network element, or the repository function network element) may also be implemented by a component (for example, a chip or a circuit) of the device.

The foregoing describes in detail the communication methods provided in embodiments of this application with reference to FIG. 3 to FIG. 5. The foregoing communication methods are mainly described from a perspective of interaction between protocol layers of a terminal device. It may be understood that, to implement the foregoing functions, the terminal device includes corresponding hardware structures and/or software modules for performing the functions.

A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

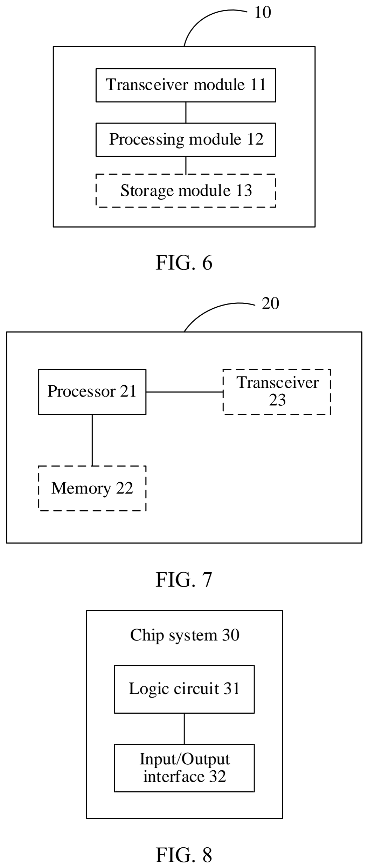

The following describes in detail communication apparatuses provided in this application with reference to FIG. 6 to FIG. 8. It should be understood that descriptions of apparatus embodiments correspond to the descriptions of the method embodiments. Therefore, for content that is not described in detail, refer to the foregoing method embodiments. For brevity, some content is not described again.

**In** embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that in embodiments of this application, module division is an example, and is merely a logical function division. During actual implementation, another division manner may be used. An example in which each functional module is obtained through division based on each corresponding function is used below for description.

FIG. 6 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the certificate management network element in the foregoing method embodiments, or may be a component (for example, a chip) of the certificate management network element.

The apparatus 10 may implement steps or procedures performed by the certificate management network element in the foregoing method embodiments. The transceiver module 11 may be configured to perform receiving and sending-related operations of the certificate management network element in the foregoing method embodiments. The processing module 12 may be configured to perform processing-related operations of the certificate management network element in the foregoing method embodiments.

In a possible implementation, the transceiver module 11 is configured to obtain first certificate information corresponding to a first service certificate of a first network element and second certificate information corresponding to a second service certificate of a second network element, where the first certificate information includes a validity period of the first service certificate and information about a network element type of the first network element, and the second certificate information includes a validity period of the second service certificate and information about a network element type of the second network element; when determining, based on the information about the network element type of the first network element and the information about the network element type of the second network element, that the network element types of the first network element and the second network element are the same, and determining, based on the validity period of the first service certificate and the validity period of the second service certificate, that the first service certificate and the second service certificate need to be updated, the processing module 12 may be configured to determine an update policy corresponding to the first service certificate and the second service certificate; and the processing module 12 may be configured to control update of the first service certificate and the second service certificate according to the update policy.

When the apparatus 10 is configured to perform the method in FIG. 3, the transceiver module 11 may be configured to perform a step of receiving and sending information in the method, for example, step S331; and the processing module 12 may be configured to perform processing steps in the method, for example, steps S320, S332, and S333.

When the apparatus 10 is configured to perform the method in FIG. 4, the transceiver module 11 may be configured to perform steps of receiving and sending information in the method, for example, steps S410, S420, S430, and S450; and the processing module 12 may be configured to perform a processing step in the method, for example, step S440.

When the apparatus 10 is configured to perform the method in FIG. 5, the transceiver module 11 may be configured to perform steps of receiving and sending information in the method, for example, steps S510, S530, and S560; and the processing module 12 may be configured to perform processing steps in the method, for example, steps S540, S550, and S570.

It should be understood that a specific process in which the units perform the foregoing corresponding steps is described in detail in the foregoing method embodiments, and for brevity, details are not described herein.

In another design, the apparatus 10 may correspond to the first network element or the second network element in the foregoing method embodiments, or may be a component (for example, a chip) of the first network element or the second network element.

The apparatus 10 may implement steps or procedures performed by the first network element or the second network element in the foregoing method embodiments. The transceiver module 11 may be configured to perform receiving and sending-related operations of the first network element or the second network element in the foregoing method embodiments. The processing module 12 may be configured to perform processing-related operations of the first network element or the second network element in the foregoing method embodiments.

In a possible implementation, the transceiver module 11 is configured to receive a first update policy from a certificate management network element, where the first update policy indicates update time of a first service certificate; and the processing module 12 is configured to send an update request message for the first service certificate to a certificate enrollment network element at the update time of the first service certificate.

When the apparatus 10 is configured to perform the method in FIG. 3, the transceiver module 11 may be configured to perform a step of receiving and sending information in the method, for example, step S331; and the processing module 12 may be configured to perform a processing step in the method, for example, step S341.

When the apparatus 10 is configured to perform the method in FIG. 4, the transceiver module 11 may be configured to perform steps of receiving and sending information in the method, for example, steps S410 and S450; and the processing module 12 may be configured to perform a processing step in the method.

When the apparatus 10 is configured to perform the method in FIG. 5, the transceiver module 11 may be configured to perform a step of receiving and sending information in the method, for example, step S560; and the processing module 12 may be configured to perform a processing step in the method.

It should be understood that a specific process in which the units perform the foregoing corresponding steps is described in detail in the foregoing method embodiments, and for brevity, details are not described herein.

In still another design, the apparatus 10 may correspond to the repository function network element in the foregoing method embodiments, or may be a component (for example, a chip) of the repository function network element.

The apparatus 10 may implement steps or procedures performed by the repository function network element in the foregoing method embodiments. The transceiver module 11 may be configured to perform receiving and sending-related operations of the repository function network element in the foregoing method embodiments. The processing module 12 may be configured to perform processing-related operations of the repository function network element in the foregoing method embodiments.

In a possible implementation, the transceiver module 11 is configured to receive a third request message from a certificate management network element, where the third request message is for requesting to provide information about a plurality of network elements corresponding to a network element type, and the third request message includes the information about the network element type; the processing module 12 is configured to determine, according to a local policy, that the certificate management network element can obtain the information about the plurality of network elements corresponding to the network element type; and the transceiver module 11 is configured to send a response message to the certificate management network element, where the response message includes information about a part or all of the plurality of network elements corresponding to the network element type.

When the apparatus 10 is configured to perform the method in FIG. 5, the transceiver module 11 may be configured to perform steps of receiving and sending information in the method, for example, steps S510 and S530; and the processing module 12 may be configured to perform a processing step in the method, for example, step S520.

It should be understood that a specific process in which the units perform the foregoing corresponding steps is described in detail in the foregoing method embodiments, and for brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by the device (for example, the certificate management network element, the first network element, the second network element, or the repository function network element) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to separately perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 7 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 7, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the certificate management network element in the foregoing method embodiments.

In another solution, the apparatus 20 is configured to implement operations performed by the first network element and the second network element in the foregoing method embodiments.

In still another solution, the apparatus 20 is configured to implement operations performed by the repository function network element in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification includes but is not limited to these memories and any memory of another appropriate type.

FIG. 8 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the certificate management network element, the first network element, the second network element, or the repository function network element in the foregoing method embodiments.

For example, the logic circuit 31 is configured to implement a processing-related operation performed by the certificate management network element, the first network element, the second network element, or the repository function network element in the foregoing method embodiments; and the input/output interface 32 is configured to implement a sending and/or receiving-related operation performed by the certificate management network element, the first network element, the second network element, or the repository function network element in the foregoing method embodiments.

An embodiment of this application further provides a computer-readable storage medium. The computer-readable storage medium stores computer instructions for implementing the method performed by the certificate management network element, the first network element, the second network element, or the repository function network element in the foregoing method embodiments.

For example, when a computer program is executed by a computer, the computer is caused to implement the method performed by the certificate management network element, the first network element, the second network element, or the repository function network element in the foregoing method embodiments.

An embodiment of this application further provides a computer program product, including instructions. When the instructions are executed by a computer, the method performed by the certificate management network element, the first network element, the second network element, or the repository function network element in the foregoing method embodiments is implemented.

An embodiment of this application further provides a communication system, including the certificate management network element, the first network element, and the second network element described above.

An embodiment of this application further provides a communication system, including the certificate management network element, the first network element, the second network element, and the repository function network element described above.

For explanations and beneficial effects of related content in any one of the apparatuses provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

All or a part of the foregoing embodiments may be implemented by using software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining first certificate information corresponding to a first service certificate of a first network element and second certificate information corresponding to a second service certificate of a second network element, wherein the first certificate information comprises a validity period of the first service certificate and information about a network element type of the first network element, and the second certificate information comprises a validity period of the second service certificate and information about a network element type of the second network element;
when determining, based on the information about the network element type of the first network element and the information about the network element type of the second network element, that the network element types of the first network element and the second network element are the same, and determining, based on the validity period of the first service certificate and the validity period of the second service certificate, that the first service certificate and the second service certificate need to be updated, determining an update policy corresponding to the first service certificate and the second service certificate; and
controlling update of the first service certificate and the second service certificate according to the update policy.

2. The method according to claim 1, wherein the first certificate information comprises the first service certificate, a network element type nfTypes field of the first service certificate comprises the information about the network element type of the first network element, the second certificate information comprises the second service certificate, and a network element type nfTypes field of the second service certificate comprises the information about the network element type of the second network element; and the method further comprises:
obtaining the information about the network element type of the first network element from the nfTypes field of the first service certificate, and obtaining the information about the network element type of the second network element from the nfTypes field of the second service certificate.

3. The method according to claim 1 or 2, wherein the obtaining the first certificate information and the second certificate information comprises:
receiving the first certificate information and the second certificate information from a certification authority;
receiving the first certificate information from the first network element, and receiving the second certificate information from the second network element; or
receiving the first certificate information and the second certificate information from an operations, administration, and maintenance OAM device.

4. The method according to any one of claims 1 to 3, wherein the method further comprises:
determining, based on the information about the network element type of the first network element and the information about the network element type of the second network element, that the network element types of the first network element and the second network element are the same; and
determining, based on the validity period of the first service certificate and the validity period of the second service certificate, that the first service certificate and the second service certificate need to be updated.

5. The method according to any one of claims 1 to 4, wherein the determining, based on the validity period of the first service certificate and the validity period of the second service certificate, that the first service certificate and the second service certificate need to be updated comprises:
determining, based on the validity period of the first service certificate and the validity period of the second service certificate, that a time interval between expiration time of the first service certificate and expiration time of the second service certificate is less than a first preset threshold.

6. The method according to any one of claims 1 to 5, wherein the determining the update policy corresponding to the first service certificate and the second service certificate comprises:
determining a first update policy corresponding to the first service certificate, and determining a second update policy corresponding to the second service certificate, wherein the first update policy indicates update time of the first service certificate, the second update policy indicates update time of the second service certificate, and the update time of the first service certificate is different from the update time of the second service certificate; and
the controlling the update of the first service certificate and the second service certificate according to the update policy comprises:
sending the first update policy to the first network element, and sending the second update policy to the second network element.

7. The method according to any one of claims 1 to 5, wherein the determining the update policy corresponding to the first service certificate and the second service certificate comprises:
determining an overall update policy corresponding to the first service certificate and the second service certificate, wherein the overall update policy indicates update time of the first service certificate and update time of the second service certificate, and the update time of the first service certificate is different from the update time of the second service certificate; and
the controlling the update of the first service certificate and the second service certificate according to the update policy comprises:
if receiving, from the first network element before the update time of the first service certificate, a first request message for requesting to update the first service certificate, rejecting responding to the first request message; and
if receiving, from the second network element before the update time of the second service certificate, a second request message for requesting to update the second service certificate, rejecting responding to the second request message.

8. The method according to any one of claims 1 to 5, wherein the determining the update policy corresponding to the first service certificate and the second service certificate comprises:
determining an overall update policy corresponding to the first service certificate and the second service certificate, wherein the overall update policy indicates to control the update of the first service certificate and the second service certificate based on a quantity of online network elements in a plurality of network elements corresponding to the network element type, the plurality of network elements corresponding to the network element type further comprise N online third network elements in addition to the first network element and the second network element, and N is a positive integer; and
the controlling the update of the first service certificate and the second service certificate according to the update policy comprises:
if N is greater than a second preset threshold, determining that the first service certificate and the second service certificate can be simultaneously updated; and
if N is less than or equal to the second preset threshold, determining that the first service certificate and the second service certificate cannot be simultaneously updated.

9. The method according to claim 8, wherein the method further comprises:
receiving, from the first network element, a first request message for requesting to update the first service certificate, and receiving, from the second network element, a second request message for requesting to update the second service certificate;
when determining that the first service certificate and the second service certificate can be simultaneously updated, responding to the first request message and the second request message; and
when determining that the first service certificate and the second service certificate cannot be simultaneously updated, rejecting responding to the first request message and/or the second request message.

10. The method according to claim 8 or 9, wherein the method further comprises:
sending a third request message to a repository function network element, wherein the third request message is for requesting to provide information about the plurality of network elements corresponding to the network element type, and the third request message comprises the information about the network element type; and
receiving a response message from the repository function network element, wherein the response message comprises information about a part or all of the plurality of network elements corresponding to the network element type, and
the information about the plurality of network elements corresponding to the network element type is for determining the quantity of online network elements in the plurality of network elements corresponding to the network element type.

11. The method according to claim 9 or 10, wherein the information about the plurality of network elements corresponding to the network element type comprises:
one or more of identifiers, fully qualified domain names FQDNs, or internet protocol IP address information of the plurality of network elements corresponding to the network element type.

12. A communication system, comprising a certificate management network element, a first network element, and a second network element, wherein
the certificate management network element is configured to obtain first certificate information corresponding to a first service certificate of the first network element and second certificate information corresponding to a second service certificate of the second network element, wherein the first certificate information comprises a validity period of the first service certificate and information about a network element type of the first network element, and the second certificate information comprises a validity period of the second service certificate and information about a network element type of the second network element;
when determining, based on the information about the network element type of the first network element and the information about the network element type of the second network element, that the network element types of the first network element and the second network element are the same, and determining, based on the validity period of the first service certificate and the validity period of the second service certificate, that the first service certificate and the second service certificate need to be updated, the certificate management network element is configured to determine a first update policy corresponding to the first service certificate, and determine a second update policy corresponding to the second service certificate, wherein the first update policy indicates update time of the first service certificate, the second update policy indicates update time of the second service certificate, and the update time of the first service certificate is different from the update time of the second service certificate;
the certificate management network element is configured to send the first update policy to the first network element, and send the second update policy to the second network element;
the first network element is configured to send an update request message for the first service certificate to a certificate enrollment network element at the update time of the first service certificate; and
the second network element is configured to send an update request message for the second service certificate to the certificate enrollment network element at the update time of the second service certificate.

13. A communication system, comprising a certificate management network element and a repository function network element, wherein
the certificate management network element is configured to obtain first certificate information corresponding to a first service certificate of a first network element and second certificate information corresponding to a second service certificate of a second network element, wherein the first certificate information comprises a validity period of the first service certificate and information about a network element type of the first network element, and the second certificate information comprises a validity period of the second service certificate and information about a network element type of the second network element;
the certificate management network element is configured to send a third request message to the repository function network element, wherein the third request message is for requesting to provide information about a plurality of network elements corresponding to the network element type, and the third request message comprises the information about the network element type;
the repository function network element is configured to send a response message to the certificate management network element, wherein the response message comprises information about a part or all of the plurality of network elements corresponding to the network element type, and the information about the plurality of network elements corresponding to the network element type is for determining a quantity of online network elements in the plurality of network elements corresponding to the network element type;
when determining, based on the information about the network element type of the first network element and the information about the network element type of the second network element, that the network element types of the first network element and the second network element are the same, and determining, based on the validity period of the first service certificate and the validity period of the second service certificate, that the first service certificate and the second service certificate need to be updated, the certificate management network element is configured to determine an overall update policy corresponding to the first service certificate and the second service certificate, wherein the overall update policy indicates to control update of the first service certificate and the second service certificate based on the quantity of online network elements in the plurality of network elements corresponding to the network element type, the plurality of network elements corresponding to the network element type further comprise N online third network elements in addition to the first network element and the second network element, and N is a positive integer; and
the certificate management network element is configured to control the update of the first service certificate and the second service certificate according to the update policy.

14. The system according to claim 13, wherein the repository function network element is further configured to determine, according to a local policy, that the certificate management network element can obtain the information about the plurality of network elements corresponding to the network element type.

15. The system according to any one of claims 12 to 14, wherein the first certificate information comprises the first service certificate, a network element type nfTypes field of the first service certificate comprises the information about the network element type of the first network element, the second certificate information comprises the second service certificate, and a network element type nfTypes field of the second service certificate comprises the information about the network element type of the second network element; and
the certificate management network element is further configured to obtain the information about the network element type of the first network element from the nfTypes field of the first service certificate, and obtain the information about the network element type of the second network element from the nfTypes field of the second service certificate.

16. The system according to any one of claims 12 to 15, wherein that the certificate management network element is configured to obtain the first certificate information and the second certificate information comprises:
the certificate management network element is configured to receive the first certificate information and the second certificate information from a certification authority;
the certificate management network element is configured to receive the first certificate information from the first network element, and receive the second certificate information from the second network element; or
the certificate management network element is configured to receive the first certificate information and the second certificate information from an operations, administration, and maintenance OAM device.

17. The system according to any one of claims 12 to 16, wherein the certificate management network element is further configured to determine, based on the information about the network element type of the first network element and the information about the network element type of the second network element, that the network element types of the first network element and the second network element are the same; and
the certificate management network element is further configured to determine, based on the validity period of the first service certificate and the validity period of the second service certificate, that the first service certificate and the second service certificate need to be updated.

18. The system according to claim 17, wherein that the certificate management network element is configured to determine, based on the validity period of the first service certificate and the validity period of the second service certificate, that the first service certificate and the second service certificate need to be updated comprises:
the certificate management network element is configured to determine, based on the validity period of the first service certificate and the validity period of the second service certificate, that a time interval between expiration time of the first service certificate and expiration time of the second service certificate is less than a first preset threshold.

19. A communication apparatus, wherein the apparatus comprises a module configured to perform the method according to any one of claims 1 to 11.

20. A communication apparatus, comprising:
a processor, configured to execute a computer program stored in a memory, to cause the apparatus to perform the method according to any one of claims 1 to 11.

21. A computer program product, wherein the computer program product comprises instructions for performing the method according to any one of claims 1 to 11.

22. A computer-readable storage medium, wherein the computer-readable storage medium stores a computer program, and when the computer program runs on a computer, the computer is caused to perform the method according to any one of claims 1 to 11.
